# EUROPÄISCHE PATENTSCHRIFT

(11) **EP 4 452 665 B1**
(45) Veröffentlichungstag und Bekanntmachung des Hinweises auf die Patenterteilung: **16.07.2025**
(21) Anmeldenummer: 24707647.4
(22) Anmeldetag: 06.03.2024
(51) Int. Cl.: B60B 27/00, B60B 27/02, B62H 5/14

(54) **RADNABE MIT DIEBSTAHLSICHERUNG**
WHEEL HUB WITH ANTI-THEFT MEANS
MOYEU DE ROUE AVEC MOYEN ANTIVOL

(30) Priorität: 09.03.2023 DE 102023105853
(43) Veröffentlichungstag der Anmeldung: 30.10.2024
(73) Patentinhaber: 2Lock GmbH, 93152 Nittendorf (DE)
(72) Erfinder: BÄUML, Simon, 93161 Eilsbrunn (DE)
(74) Vertreter: K & H Bonapat Patentanwälte Koch · von Behren & Partner mbB
(86) Internationale Anmeldenummer: PCT/DE2024/100181
(87) Internationale Veröffentlichungsnummer: WO 2024/183864

(56) Entgegenhaltungen:
- CN-A- 104 787 154
- CN-U- 204 978 965
- DE-A1- 19 857 266
- DE-A1- 3 100 905
- US-A- 1 150 406

## Beschreibung

Die vorliegende Erfindung betrifft eine Radnabe, sowie ein Rad mit der darin verbauten Radnabe beziehungsweise ein Vehikel mit dem darin montierten Rad. Die Verwendung der Radnabe ist insbesondere geeignet für Zweiräder, wie Fahrräder, Pedelecs, Mofas, Mopeds oder Motorräder, aber auch für Räder im allgemeinen, wie etwa für ein Dreirad oder einen Rollstuhl. Im Folgenden sind diese für die vorliegende Erfindung relevanten mobilen Fahrzeuge alle unter dem Begriff "Vehikel" zusammengefasst.

Herkömmlicherweise wird ein Rad als Vorderrad eines Fahrrades oder Zweirades in einer Radgabel eingespannt. Im Stand der Technik gibt es hier verschiedene technische Umsetzungsmöglichkeiten: beispielsweise gibt es Radnaben, bei denen an den jeweiligen Seitenflächen des zylindrischen Narbengehäuses jeweils Außengewinde abragen. Diese können in ein jeweiliges U-Profil eines Gabelendes eingeschoben und nachfolgend mittels einer Schraubenmutter fixiert werden. Auch ist es bekannt, dass das Nabengehäuse auf einer koaxial zur Rotationsachse des Rades vorgesehenen Hohlwelle sitzt, durch die eine Steckachse schiebbar ist. Während sich an einem Ende der Steckachse ein Schraubenkopf befindet, ist an dem gegenüberliegenden Ende der Steckachse ein Außengewinde vorgesehen. Zum Fixieren des Rades in der Radgabel hält der radial abstehende Schraubenkopf die Steckachse in dem einen Gabelholm, wohingegen am gegenüberliegenden Ende eine Schraubenmutter aufzuschrauben ist, um das Rad letztendlich in der Gabel zu fixieren. Schließlich gibt es Schnell-Spann-Verschluss-Ausführungsformen, bei denen das Außengewinde des Steckbolzens mit einem Bügel an der Schraubmutter versehen ist, der durch Umlegen per Hand ein letztendliches Festziehen des Rades in der Gabel realisiert.

Für Vehikel ist nach wie vor Diebstahlschutz ein relevantes Thema. Im Stand der Technik sind hierzu Kabel-, Bügel- oder Faltschlösser bekannt, mit denen beispielsweise ein im Vehikel verbautes Rad "abgesperrt" wird, d.h. ein Schloss wird durch den Zwischenraum der Radspeichen geführt und nachfolgend verriegelt. Dadurch lässt sich das Rad nicht mehr drehen und zumindest das Vehikel nicht wegschieben. Insofern ein solches Schloss nun an einem weiteren Gegenstand fixiert wird, lässt sich das Rad mitunter auch nicht mitnehmen; Doch wenn das Rad aus der Radgabel des Vehikels gelöst wird, ist das Vehikel zur Mitnahme befreit. Letztendlich bleibt dann lediglich das Rad an Ort und Stelle nicht aber das Vehikel. Im Stand der Technik ist es anhand der CN 2 04 978 965 U bekannt, die zum Einspannen der Radnabe vorgesehene Steckachse als Hohlwelle auszuführen, in die ein Bolzenschloss einschiebbar ist. Dieses Bolzenschloss weist einen Sperrbolzen auf, der mittels Schlüsselbetätigung radial zur Bolzenachse verfahrbar ist, und zwar durch eine Bohrung der Steckachse hindurch und weiter durch eine konzentrisch angeordnete Bohrung am Mantel der Radnabe hindurch. Damit ist eine Rotation der Radnabe verhindert und das Rad ist rotationsstarr abgesperrt. Demgegenüber zeigt die US 6 425 642 einen Sperrmechanismus zum Verhindern einer Demontage eines Rades aus einer Gabelbrücke. Der Sperrmechanismus verfügt über eine Steckachse, auf deren ein Ende ein Schlosskörper aufzuschieben ist, dessen Sperrbolzen bei Schlüsselbetätigung in eine Nut auf der Steckachse einragt und die Steckachse verriegelt. Schließlich offenbart die DE 10 2009 033 475 A1 ein Nabenschloss, bei dem ein im Nabengehäuse verfahrbarer Riegel in einen auf der Steckachse gehaltenen Zahnkranz eingeschoben werden kann, um eine Rotation des Rades zu blockieren. Dokument DE 198 57 266 A1 zeigt eine weitere Radnabe mit Diebstahlschutz.

Die vorliegende Erfindung setzt bei obiger Problematik der Entnahme des Rades vom Vehikel an und stellt eine Radnabe vor, die eine unbefugte Entnahme des Rades maßgeblich erschwert. Dadurch kann gleichzeitig der Diebstahlschutz des Vehikels selbst als verbessert angesehen werden, weil sich das Rad nicht mehr einfach vom Vehikel lösen lässt, um das Vehikel bei festgesperrtem Rad zu entnehmen.

Die erfindungsgemäße Radnabe ist durch die Merkmale des Anspruchs 1 gekennzeichnet. Vorteilhafte Ausführungsformen sind in den Unteransprüchen wiedergegeben. Eine Kombination aus erfindungsgemäßer Radnabe und Vehikel mit Radgabel ist im Anspruch 11 genannt.

Kern der Erfindung liegt darin, einen Mechanismus vorzusehen, der zwar eine einfache Montage des Rades in einer Radgabel mit anschließender Verriegelung der Steckachse in der Radnabe ermöglicht, jedoch dessen Entnahme aus der Radgabel nur unter Hinzunahme einer Art Schlüssel zulässt. Als Schlüssel wird hierunter ein Mittel verstanden, mittels dem eine Verriegelung der Steckachse in ihrer letztendlichen Position in der Hohlwelle entsperrt werden kann, um die Steckachse aus der Hohlwelle der Radnabe zu ziehen.

Erfindungsgemäß weist die Radnabe hierfür eine Radnaben-Achse und ein auf der Radnaben-Achse gehaltenes Nabengehäuse auf, wobei die Radnaben-Achse als Hohlwelle ausgebildet ist. Normalerweise wird die Radnaben-Achse starr in einer Radgabel eingespannt, wohingegen im eingspannten Zustand der Radnabe das Nabengehäuse auf der Achse rotierbar gehalten ist. Die Steckachse der Radnabe wird zum Einspannen der Radnabe in eine Radgabel durch die Hohlwelle gesteckt, und nachfolgend mit ihren jeweiligen Enden an Gabelenden fixiert. Die Verriegelung der Steckachse in der Radnabe - genauer gesagt in deren Hohlwelle - erfolgt durch eine im Radnabengehäuse verfahrbar gehaltene Sperrnase, die zum Verriegeln in eine an der Steckachse vorgesehene Ausnehmung greift. Die Sperrnase ist zwischen zwei Endstellungen verfahrbar, wobei die eine Endstellung eine verriegelte Position der Steckachse in der Hohlwelle definiert, wohingegen die andere Endstellung eine entriegelte Position definiert, bei deren Erreichen die Steckachse aus der Hohlwelle herausgezogen werden kann.

Besagte Sperrnase ist in dem Naben-Gehäuse manipulationssicher untergebracht. Mit anderen Worten ist das Nabengehäuse allseits verschlossen und bietet keine Zugriffsmöglichkeit zu deren Innenraum. Platz zur Unterbringung der Sperrnase bietet der Raum zwischen Außenumfang der Hohlwelle und dem Zylindermantel des Nabengehäuses. Um hierbei einen Zugriff der Sperrnase auf die Steckachse zu ermöglichen, weist die Hohlwelle eine radiale Öffnung auf, durch die hindurch oder in der die Sperrnase zum Erreichen ihrer jeweiligen Endstellungen bewegt werden kann.

Zum Verfahren der Sperrnase ist vorteilhafterweise ein Elektromotor vorgesehen, der gleichermaßen im Nabengehäuse gehalten ist. Hierzu ist ein Bauteilträger im Nabengehäuse vorgesehen, der rotationsstarr auf der Hohlwelle sitzt.

Gemäß einer vorteilhaften Ausführungsform ist zudem die Sperrnase mittels einer Feder vorspannbar, die die Sperrnase in ihre letztendliche Verriegelungsstellung zu drücken vermag. Die Feder wird durch das Verfahren der Sperrnase in die Entriegelungsstellung mittels Motoraktion vorgespannt.

### Ausführungsform 1:

Gemäß einer Ausführungsform der Erfindung ist die Ausnehmung an der Steckachse als eine radial umlaufende Vertiefung oder Nut in Form einer Außendurchmesser-Reduzierung der Steckachse über einen vorbestimmten Längenabschnitt vorgesehen. Bei vollständig eingeschobener Steckachse in der Hohlwelle ist örtlich und funktional gegenüber diesem Ausnehmungs-Abschnitt an dem Bauteilträger die verfahrbar gehaltene Sperrnase vorgesehen, die mittels Motor zwischen ihren zwei Endpositionen verfahrbar ist. In der einen "zurückgezogenen" Endposition, die einen entsperrten oder entriegelten Zustand des Schnellverschlusses definiert, ragt die Sperrnase nicht in die Ausnehmung oder Ausfräsung ein. Dann ist die Steckachse "freigegeben" und aus dem Hohlkanal der Hohlwelle herausziehbar. In der anderen, der zweiten Endposition, die einen gesperrten Zustand der Steckachse definiert, wird die Sperrnase aus ihrer Entsperr-Position mittels Motorkraft in der oder durch die radiale Öffnung in der Hohlwelle verfahren, um die Sperrposition zu erreichen.

Diesbezüglich sind zwei Alternativen möglich: Gemäß einer ersten Alternative bringt der Motor die Sperrnase in eine Stellung, mit der sie in besagte Vertiefung an der Steckachse einragt. Gemäß der zweiten vorteilhafteren Alternative bewegt der Motor die Sperrnase lediglich in eine "Freigabe-Stellung", in der die Sperrnase noch nicht zwingend in die Ausfräsung einragt. Erst die hierzu vorgesehene Feder kann in dieser Freigabe-Stellung die Sperrnase in die Ausfräsung drücken. Andererseits wird durch Aktivieren des Motors in Gegenrichtung die Sperrnase aus der Ausfräsung herausbewegt, womit die Steckachse und damit das Rad in einen entsperrten Zustand gelangt, bei dem die Steckachse aus dem Hohlkanal und damit den Gabelenden herausziehbar ist und das Rad aus der Gabel entnommen werden kann.

Durch ein Aktivieren des der Sperrnase zugeordneten Motors lässt sich die Steckachse somit diebstahlsicher in dem Hohlkanal und damit zwischen den Gabelenden verriegeln. Insofern die Gabelenden eine umlaufend geschlossene Bohrung zum Durchstecken der Steckachse haben, kann das Rad nicht mehr vom Vehikel entnommen werden.

### Ausführungsform 2:

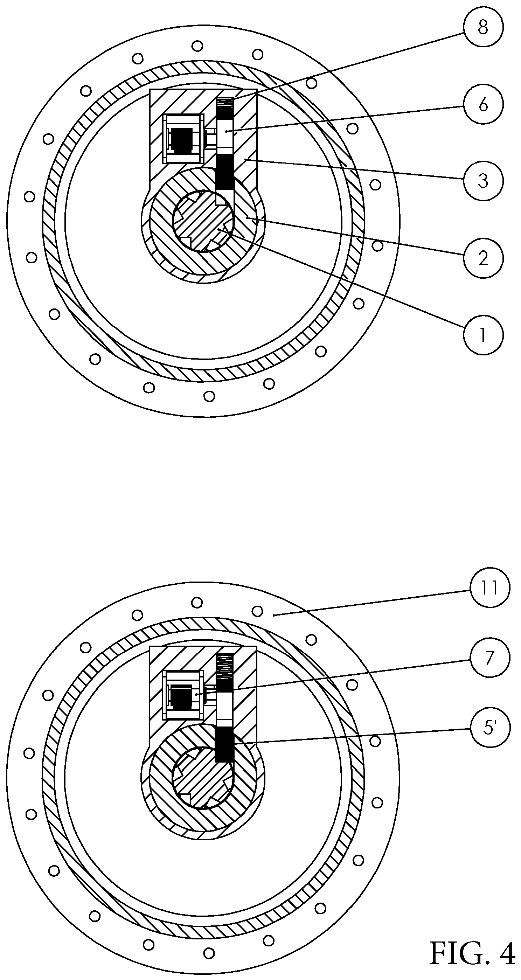

Gemäß einer anderen Ausführungsform der Erfindung ist die besagte Ausnehmung durch mindestens eine Tasche gebildet, die durch einen radialen keilförmigen Einschnitt am Außenumfang der Steckachse in Längsachsenrichtung vorgesehen ist. Komplementär zu dieser Tasche ist die Sperrnase zum Radius der Hohlwelle vorteilhaft versetzt gehalten - also parallel zum Radius der Steckachse versetzt, womit der keilförmige Einschnitt für die Sperrnase eine Art "Dreh-Schaufel" bildet, sobald die Steckachse in der passenden Richtung gedreht wird. Das hat zur Folge, dass die Steckachse in einer ihrer beiden Drehrichtungen auch in einer Situation, in der die Sperrnase in Verriegelungsstellung vorliegt, drehbar bleibt, weil beim Drehen der Steckachse eine tangentiale Kraft auf die Sperrnase wirkt, mit der die Sperrnase in Richtung ihrer Entriegelungsstellung durch die Drehung der Steckachse angehoben werden kann; Wohingegen die andere Drehrichtung blockiert ist (siehe Details zur Veranschaulichung in Ausführungsform 2 gemäß Fig. 4). Dann ist auch die Hohlwellen-Öffnung, in der sich oder durch die sich die Sperrnase bewegen lässt, um in ihre jeweiligen Endstellungen zu gelangen, nicht radial angeordnet sondern gleichermaßen parallel zum Radius der Hohlwelle versetzt.

Auch hier sind wieder zwei Alternativen möglich: Gemäß einer ersten Alternative bringt der Motor die Sperrnase in eine Stellung, mit der sie in besagte Tasche an der Steckachse einragt. Gemäß der zweiten vorteilhafteren Alternative bewegt der Motor die Sperrnase lediglich in eine "Freigabe-Stellung", in der die Sperrnase noch nicht zwingend in die Tasche einragt. Erst die hierzu vorgesehene Feder kann in dieser Freigabe-Stellung die Sperrnase in die Tasche drücken. Andererseits wird durch Aktivieren des Motors in Gegenrichtung die Sperrnase aus der Tasche herausbewegt, womit das die Steckachse und damit das Rad in einen entsperrten Zustand gelangt, bei dem die Steckachse aus dem Hohlkanal und damit den Gabelenden herausziehbar ist und das Rad aus der Gabel entnommen werden kann.

Obige Ausführungsform eignet sich insbesondere und in vorteilhafter Weise bei einem System, bei dem ein Gabelende ein Innengewinde aufweist, in das das Außengewinde der Steckachse einschraubbar ist. So lässt sich die Steckachse problemlos in das Gewinde zum Fixieren des Rades in der Gabel einschrauben, wohingegen ein Öffnen in entgegengesetzter Drehrichtung für ein Aufschrauben der Steckachse aus dem Gabelende verhindert ist, insofern die Sperrnase nämlich in die Tasche der Steckachse einragt.

Sind nun gemäß einer weiteren vorteilhaften Ausführungsform mehrere dieser Taschen vorgesehen, die über den Außenumfang der Steckachse verteilt sind, ergibt sich eine Ratschenwirkung: Beim Drehen der Steckachse (beispielsweise zum Festziehen derselben in den Gabelenden), wird die Sperrnase nachfolgend einer flächig anliegenden Position in der jeweiligen Tasche entgegen der Federkraft in Richtung der Entriegelungsstellung durch die radiale Kraftkomponente angehoben und verschoben, wobei die Sperrnase beim Weiterdrehen der Steckachse durch die Federvorspannung in die nächste Tasche einrutscht. Durch diese Ratschenmechanik ergibt sich bei einer Vollumdrehung der Steckachse eine Wirkung auf die Sperrnase ähnlich einem Schaufelrad.

Die Drehbewegung der Steckachse in der entgegengesetzten Drehrichtung ist demgegenüber blockiert, weil in dieser Drehrichtung eine Kraft auf die Sperrnase wirkt, die nur eine einzige Kraftrichtung senkrecht zur Verschieberichtung der Sperrnase hat. Diese Drehrichtung ist somit erst dann möglich, wenn die Sperrnase mittels des Motors aus ihrer Verriegelungsstellung in die Entriegelungsstellung verfahren wurde.

Weitere Details, die beide obige Ausführungsformen mit Nut und Tasche betreffen:
Gemäß einer vorteilhaften Ausführungsform zum Verfahren der Sperrnase weist der zugehörige Motor eine Drehwelle auf, auf der rotationsstarr zur Drehwelle ein Exzenter-Lager mit runder Außen-Zylinderform festsitzt. Die Bohrung des Lagers zur Aufnahme der Drehwelle ist exzentrisch in dem Zylinder angeordnet. Wird die Drehwelle des Motors gedreht, so beschreibt das Exzenter-Lager eine Kreisbewegung. Komplementär zum Exzenter-Lager weist die Sperrnase eine Bohrung - beispielsweise durchgehend oder als Sackloch - auf, in der das Exzenter-Lager gehalten ist. Dreht sich nun die Drehwelle des Motors, so dreht sich mit ihr das auf ihr exzentrisch gehaltene Exzenter-Lager, womit die Sperrnase in unterschiedliche Positionen gebracht werden kann. In einer vorteilhaften Ausführungsform ist weiters die Bohrung in der Sperrnase größer als der Außenumfang des Exzenter-Lagers dimensioniert und die Sperrnase darüber hinaus in einer linearen Schlittenführung verfahrbar gehalten, so dass aus der Drehbewegung der Drehwelle des Motors eine lineare Verschiebung der Sperrnase resultiert, mit der die Sperrnase in ihre beiden oben beschriebenen Stellungen verfahren werden kann.

Gemäß einer weiteren vorteilhaften Ausführungsform ist die Bohrung in der Sperrnase als Langloch oder annähernd in der Form eines Langlochs ausgeführt, dessen Längserstreckung senkrecht zur Verschieberichtung der Sperrnase steht. Bei einer Ausführungsform der Sperrnase mit Federvorspannung, die in derjenigen Bewegungsrichtung wirkt, in der die Sperrnase in ihre Verriegelungsstellung gelangt, kann der Motor die Sperrnase lediglich entgegen der Federkraft aus der Ausfräsung oder der Tasche der Steckachse herausziehen - womit gleichzeitig die Feder vorgespannt wird; Nicht jedoch wird die Sperrnase mit der Motorkraft in die Ausfräsung vollständig eingeschoben. Während der Motor die Sperrnase in eine "Freigabe-Stellung" überführt, führt erst die Federkraft dazu, dass die Sperrnase vollständig in die Ausnehmung oder Vertiefung, bzw. Tasche gelangt. Dreht der Motor das Exzenter-Lager in die besagte "Freigabe-Stellung" zur Verriegelung, so gelangt das Exzenterlager allenfalls in die Mitte des Langlochs. Mit anderen Worten kann der Motor die Sperrnase nur insofern in dem Langloch "freigegeben", dass erst die Feder mit ihrer Federkraft die Sperrnase in die Vertiefung einschiebt. Dies hat den Vorteil, dass der Motor keinen Schaden nimmt, wenn die Steckachse nicht vollständig in der Gabel und der Hohlwelle eingeschoben ist und die Sperrnase deshalb nicht passgenau in die Ausfräsung gelangen kann. Dann nämlich sitzt die Sperrnase mit vorgespannter Feder auf dem Umfang der Steckachse mit größerem Außendurchmesser. Erst bei vollständigem Einschieben der Steckachse in die Naben-Hohlwelle gelangt sodann die Sperrnase durch die Federkraft in besagte Ausfräsung oder Tasche.

Generell ist der Motor über eine Fernbedienung und Fernsteuerung via einer Steuerung auf einem Steuer-Chip ansteuerbar, welche Komponenten am Bauteilträger im Nabengehäuse vorgesehen sind. Zum Erkennen der beiden Extrempositionen des Exzenters, in denen die Sperrnase einmal in der Entriegelungsstellung vorliegt und ein anderes Mal in der Verriegelungsstellung, bzw. der "Freigabe-Stellung", ist eine Steuerschaltung vorgesehen: Sobald die Sperrnase durch Drehen der Drehwelle des Motors die vollständige Entriegelungsstellung erreicht hat, erhöht sich der Strombedarf und damit die Stromleistung des Motors, insofern der Motor die Sperrnase nicht weiterzubewegen vermag, was wiederum auf der Steuerung des Steuerchips detektiert wird. Das Erreichen des maximalen Stromflusses definiert das Erreichen der Entriegelungsstellung der Sperrnase. Das Erreichen dieser Stellung kann durch einen mechanischen Anschlag unterstützt sein, auf den die Sperrnase beim Erreichen ihrer Entriegelungsstellung trifft und der eine weitere Verschiebebewegung durch den Motor der Sperrnase in dieser Bewegungsrichtung verhindert. Auf dem Speicherchip ist sodann eine Zeitphase gespeichert, die benötigt wird, um von dieser Entriegelungsstellung aus die Drehwelle des Motors zur Rotation anzusteuern, sodass die entgegengesetzte Verriegelungsstellung - oder besser gesagt die bezeichnete "Freigabe- Stellung" der Sperrnase - erreicht wird.

Eine Stromversorgung für die elektrisch betriebenen Komponenten der Radnabe kann durch einen in der Radnabe untergebrachten Akku erfolgen. Dieser kann auch mithilfe eines in der Radnabe untergebrachten Radnaben-Dynamos energetisch versorgt werden. Alternativ ist es gemäß einer vorteilhaften Ausführungsform vorgesehen, dass die Stromversorgung mithilfe eines am Vehikel vorgesehenen Akkus versorgt wird.

Im Folgenden wird die Erfindung zu beiden Ausführungsformen erläutert, die jeweils in den beigefügten Zeichnungen wiedergegeben sind.

In den Zeichnungen zeigen
- Fig. 1: eine Explosionsansicht in Seitenansicht der erfindungsgemäßen Radnabe mit umlaufender Nut;
- Fig. 2: zwei Schnittansichten der Ausführungsform von Fig. 1 mit jeweils einer Sperrnase in Entriegelungsstellung und einer Sperrnase in Verriegelungsstellung;
- Fig. 3: eine Explosionsansicht in Seitenansicht der erfindungsgemäßen Radnabe in einer zur Fig. 1 alternativen Ausführungsform mit Ratschenmechanik;
- Fig. 4: zwei Schnittansichten der Ausführungsform von Fig. 3 mit jeweils einer Sperrnase in Entriegelungsstellung und einer Sperrnase in Verriegelungsstellung;

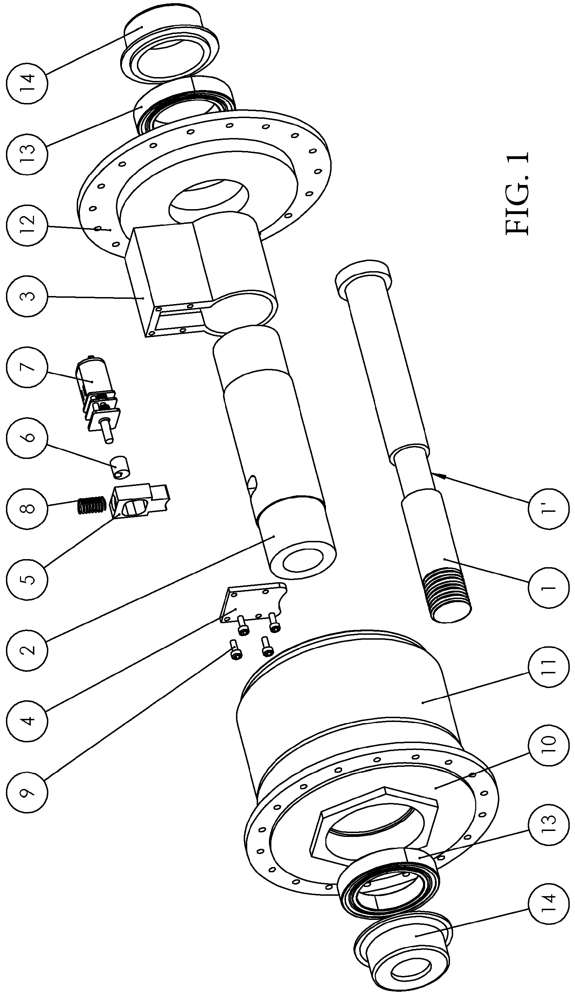

Fig. 1 zeigt eine Ausführungsform der erfindungsgemäßen Radnabe mit weiteren Details, wie sie oben als "Ausführungsform 1" vorgestellt wurde. Die Radnabe hat ein geschlossenes zylinderförmiges Gehäuse mit zwei das Gehäuse abschließenden Seitenflächen 10, 12, die am Außenumfang jeweils Bohrungen aufweisen, um darin Speichen zu fixieren. Die Seitenflächen sind durch einen Zylindermantel 11 des Nabengehäuses fest verbunden, womit ein Innenraum des Nabengehäuses geschaffen ist. Koaxial zur Achse des Nabengehäuses ist eine Hohlwelle 2 der Radnabe vorgesehen, die nachfolgend einer Montage des Rades am Vehikel rotationsstarr beidseitig an Gabelenden des Vehikels gehalten ist. Damit sich das Rad, d.h. die aufgespeichte Rad-Felge mit dem Nabengehäuse auf der Hohlwelle 2 drehen kann, sitzt auf beiden Enden der Hohlwelle 2 ein jeweiliges Kugellager 13, auf dem jeweilig eine Seitenfläche des Nabengehäuses gehalten ist. Das Nabengehäuse wird ferner durch beidseitig der jeweiligen Seitenfläche vorgesehene Distanzbuchsen 14 geschlossen, die lediglich eine Öffnung zum Durchführen einer Steckachse 1 aufweisen. Damit ist bis auf diese Öffnungen das Nabengehäuse geschlossen und von außen nicht zugänglich.

Zum Fixieren des Rades, d.h. der Radnabe an den Holmen einer Radgabel (nicht gezeigt) ist die Steckachse 1 vorgesehen, die durch besagte Öffnungen der Distanzbuchsen, weiters durch die Seitenflächen des Nabengehäuses und die Hohlwelle 2 durchzuschieben ist. Die Länge der Steckachse 1 ist so gewählt, dass sie über beide Seitenflächen 10, 12 des Nabengehäuses abragen kann. Im gezeigten Ausführungsbeispiel hat die Steckachse an ihrem einen Ende einen Imbus-Schraubenkopf mit vom übrigen Außendurchmesser der Steckachse abstehenden Schrauben-Kragen; wohingegen die Steckachse 1 am anderen Ende ein Außengewinde aufweist. Zum Montieren der Radnabe wird die Steckachse 1 mit dem Außengewinde voran durch die Hohlwelle 2 gesteckt, sodass die Steckachse darauffolgend mittels eines Imbus-Schraubenschlüssels durch Eindrehen des Außengewindes in ein komplementäres Innengewinde an einem Gabelholm eingeschraubt werden kann. Statt des Imbuskopfes ist auch ein Mehrkant-Schraubenkopf möglichen.

Auf der Hohlwelle 2 sitzt rotationsstarr ein Bauteilträger 3, an dem ein Motor 7 gehalten ist. Der Motor weist eine Drehwelle auf, auf der drehfest mit der Drehwelle ein Exzenter 6 sitzt. Der Exzenter ist ein Vollzylinder, zu dessen Längsachse versetzt ein Bohrung vorgesehen ist, die in ihrem Innendurchmesser dem Außendurchmesser der Drehwelle entspricht. Wird nun die Drehwelle des Motors in Rotation gebracht, so beschreibt der Außenumfang des Exzenter-Zylinders eine Kreisbewegung.

Mit dem Bezugszeichen 5 ist ein Sperrnase offenbart, die in ihrem oberen Teil eine Langloch-Bohrung aufweist. In dieser Langlochs-Bohrung ist der Exzenter 6 gelagert. Die Orientierung der Längsachse der Langloch-Bohrung ist so gewählt, dass die Sperrnase 5 bei Drehung des Exzenters 6 eine lineare Bewegung vollzieht - und zwar in radialer Richtung vom Innenraum des Nabengehäuses zur Steckachse und zurück. Die seitliche Begrenzung zu dieser linearen Bewegung der Sperrnase 5 liefert eine Öffnung in der Hohlwelle 2. Diese Öffnung ist so konfiguriert, dass nur ein linearer Freiheitsgrad für eine Bewegung der Sperrnase 5 verbleibt. Mit der Rotation der Drehwelle des Motors 7 lassen sich so zwei Extrempositionen der Sperrnase definieren: die eine bildet die Entriegelungsstellung der Sperrnase bei vollständig angehobener Sperrnase 5, wohingegen die andere Extremposition eine "Freigabe-Stellung" für die Verriegelung bedeutet. Diese Freigabe-Stellung hat die Bedeutung, dass die Sperrnase 5 nicht allein mittels der Motorkraft mit ihrem einen Ende in die umlaufende Nut 1' gelangt. Diese letztendliche Verriegelungsstellung der Sperrnase 5 mit ihrem einen Ende in der umlaufende Nut 1' erfolgt ausschließlich durch die Entspannung der vorgespannten Feder 8. Diese Feder bewirkt eine Kraft in Richtung der linearen Verfahrbar-Bewegung der Sperrnase 5, mit der das eine, nämlich das in der Figur gezeigte untere Ende in die umlaufende Nut 1' gelangt. Damit ist erreicht, dass bei nicht voll eingeschobener Steckachse 1 die Sperrnase 5 nicht mittels Motorkraft gegen die Mantelfläche der Steckachse mit größerem Außendurchmesser gedrückt werden kann. Die maximale Verfahrbar-Bewegung der Sperrnase 5 durch den Motor 7 und dessen Exzenter 6 ist demnach so gewählt, dass die Sperrnase 5 mittels Motorkraft nur so weit in die oder in der Hohlwelle 2 einge- bzw. verschoben werden kann, dass die Sperrnase 5 die Mantelfläche der Steckachse 1 mit maximalem Außendurchmesser (abgesehen vom Schrauben-Kragen) nicht zu berühren vermag.

In der letztendlichen Verriegelungsstellung aus Summe der mit Motorkraft erfolgten linearen Verschiebung zuzüglich der Verschiebung mittels Federkraft der Feder 8 ragt die Sperrnase 5 bei vollständig eingeschobener Steckachse 1 in die umlaufende Nut 1' als Ausnehmung der Steckachse. In dieser Stellung lässt sich die Steckachse 1 nicht mehr aus der Hohlwelle herausziehen. Mit anderen Worten lässt sich damit auch das Rad selbst bei Lösen der Schraubverbindung zwischen dem Außengewinde der Steckachse 2 und Innengewinde des Gabelholms (nicht gezeigt) nicht mehr aus dem/den Gabelholmen entnehmen.

In einer zusätzlichen vorteilhaften Weise ist die umlaufende Nut 1' auf der Steckachse 1 in dessen Längsrichtung in der Länge so dimensioniert, dass sie mindestens so langgestreckt ist, wie die Länge des Außengewindes der Steckachse zuzüglich der Dicke (= Dimension entlang der Längsachse der Steckachse) der Sperrnase 5. Zusätzlich ist dann auch die Platzierung der umlaufende Nut 1' auf der Steckachse 1 so gewählt, dass die Sperrnase in Verriegelungsstellung mit ihrer einen Flanke an derjenigen Schulter der umlaufende Nut anliegt, die von dem Außengewinde weiter beabstandet ist. Diese Konfiguration hat folgende Bewandtnis: sollte versucht werden, die Steckachse bei montiertem Rad aufzuschrauben und gelangte die Sperrnase in der Verriegelungsstellung an die Schulter der umlaufenden Nut bevor die Schraubverbindung zwischen Außengewinde der Steckachse und dem Innengewinde des Gabelholmes vollständig gelöst würde, so würde ein weiteres Verdrehen der Steckachse dazu führen, dass sich die Steckachse nicht weiter in Längsrichtung ihrer Längsachse bewegen ließe, aber die beiden Gabelholme aufgrund einer Verschiebung zwischen Außengewinde der Steckachse und Innengewinde am Gabelholm auseinander gespreizt würden. Dies hätte ein Schaden der Gabel zufolge - was es durch obige Konfiguration zu verhindern gilt.

Der Bauteilträger 3 als Motorgehäuse ist mit einer Platte 4 abgedeckt, die mittels Verschraubung 9 am Bauteilträger fixiert ist.

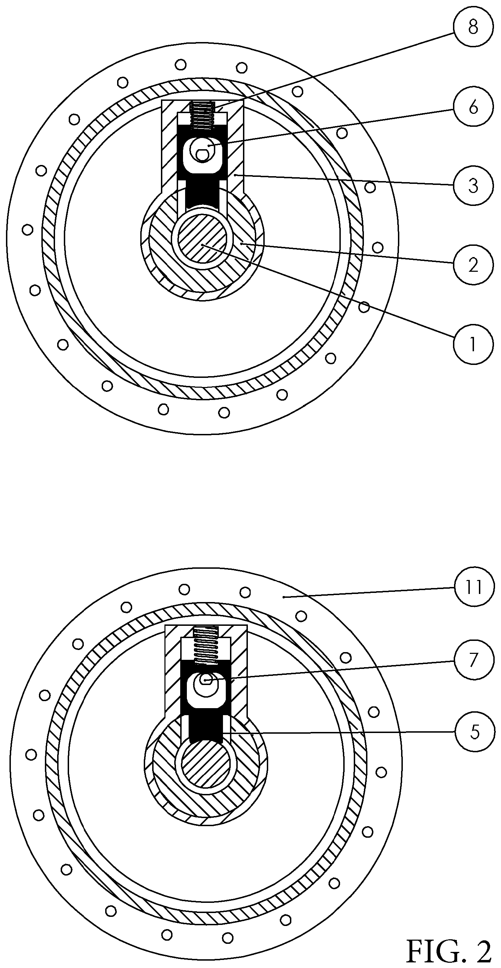

Fig. 2 zeigt die Ausführungsform aus Figur 1 in zusammengesetztem Zustand und in geschnittener Seitenansicht. In der oberen Darstellung dieser Figur befindet sich die Sperrnase 5 in der Entriegelungsstellung. Mit anderen Worten ist die Sperrnase 5 soweit aus der umlaufenden Nut 1' der Steckachse angehoben, d. h. herausgezogen, dass die Steckachse in Längsrichtung frei beweglich ist und sie aus der Hohlwelle 2 herausgezogen werden kann. Diese Stellung der Sperrnase 5 wird erreicht durch ein Zusammenwirken der Drehwelle des Motors 7 mit dem Exzenter 6. Die durch den Exzenter 6 beschriebene Kreisbewegung hebt die Sperrnase an ihre maximal angehobene Stellung. Eine Umwandlung dieser Kreisbewegung des Exzenters 6 in eine lineare Verschiebebewegung der Sperrnase 5 erfolgt mitunter durch die Führung der Sperrnase in dem Bauteilträger 3. Eine weitere Führung der Sperrnase 5 ist durch die Öffnung in der Hohlwelle 2 vorgegeben, in der die Sperrnase 5 verfahren wird. In der Entriegelungsstellung der Sperrnase ist die Feder 8 maximal vorgespannt. Wie das aus dieser Darstellung ferner hervorgeht, ist die Lage des Langlochs der Sperrnase so gewählt, dass dessen Längsachse senkrecht auf die lineare Bewegungsrichtung der Sperrnase steht. Das Aktivieren des Motors mit Rotation seiner Drehwelle verursacht nun eine exzentrische Bewegung des Exzenters 6 und damit eine Verschiebebewegung der Sperrnase 5; und zwar einmal in radialer Richtung hin zur umlaufenden Nut 1' sowie entgegengesetzt hierzu in radialer Richtung der Steckachse nach außen.

In der unteren Darstellung von Fig. 2 befindet sich die Sperrnase 5 in der Verriegelungsstellung der Steckachse 1. Mit anderen Worten ragt die Sperrnase in die umlaufende Nut 1' ein und verhindert damit ein Herausziehen der Steckachse aus der Hohlwelle. Diese Stellung ist zum einen der Rotation der Drehwelle des Motors geschuldet, die die Sperrnase 5 jedoch lediglich in besagte Freigabe-Stellung zu verbringen vermag. Die restliche Bewegung der Sperrnase in die umlaufende Nut wird durch die Feder 8 vollzogen. Dies lässt sich an dem Abstand zwischen Exzenter 6 und der Schulter des Langlochs in dieser Stellung der Sperrnase erkennen.

Um einen geeigneten Sitz der Sperrnase 5 auf der Steckachse 1 in der umlaufende Nut 1' zu ermöglichen, ist die Sperrnase an ihrer Kontaktfläche mit der Steckachse mit derselben Wölbung der Steckachse auf ihrem Außenumfang ausgebildet.

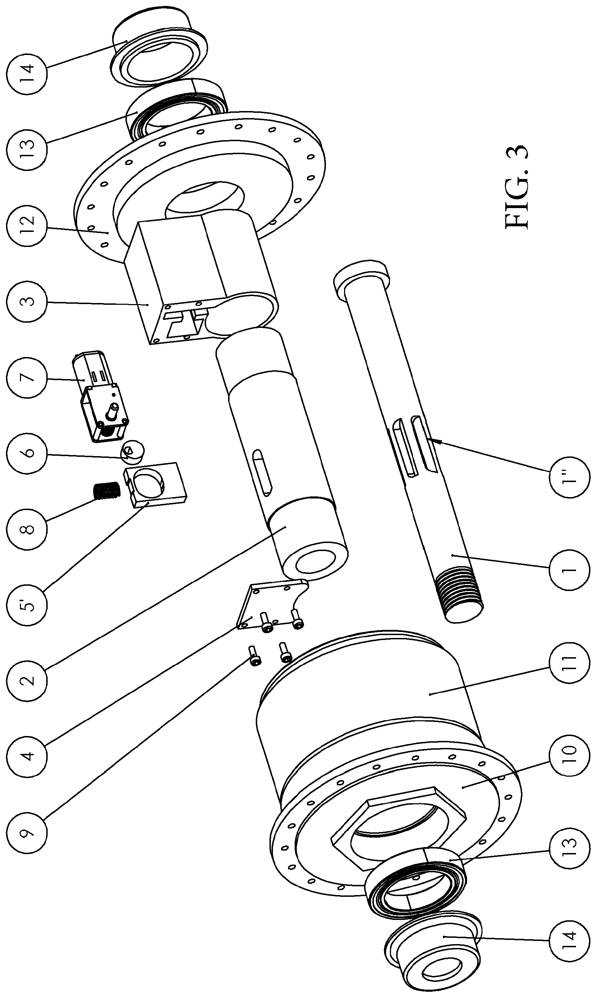

Figur 3 zeigt nun die erfindungsgemäße Radnabe in der oben vorgestellten "Ausführungsform 2". Identische Bezugszeichen dieser Figur beziehen sich auf dieselben Bauelemente. Die Steckachse 1 weist hier nun über den Außenumfang äquidistant verteilte Einkerbungen in Form von Taschen 1" als Ausnehmung auf der Steckachse auf. Ferner weist die Hohlwelle eine Öffnung auf, in der eine Sperrnase 5' verfahren werden kann, wobei diese Öffnung parallel versetzt zum Radius der Hohlwelle 2 angeordnet ist. Dies kann man insbesondere gut in den Darstellungen von Figur 4 ersehen. Im Übrigen ist die Öffnung in Längserstreckung parallel zur Längsachse der Steckachse.

Jede Tasche 1" ist als keilförmige Einkerbung auf der Steckachse in bestimmter Länge vorgesehen. Damit entspricht diese Einkerbung der komplementären Form des quaderförmigen Endes der Sperrnase 5' in ihrer Längserstreckung in deren Verriegelungsstellung. Die Längserstreckung der Sperrnase 5' ist hier koaxial zur Längsachse der Steckachse. Mit anderen Worten ist die Sperrnase in Längserstreckung vollflächig in der jeweiligen Tasche anliegend. Wie das auch in Fig. 3 zu erkennen ist, hat der Bauteilträger 3 eine Führung für die Sperrnase 5', durch die der Sperrnase 5' eine lineare Bewegungsrichtung vorgegeben ist. Eine weitere Führung der Sperrnase 5' ist durch die Öffnung in der Hohlwelle 2 gegeben, in der die Sperrnase 5' verfahrbar gehalten ist. In der Entriegelungsstellung der Sperrnase (siehe obere Darstellung in Fig. 4) ist die Feder 8 maximal vorgespannt. Wie das aus dieser Darstellung ferner hervorgeht, ist die Lage des Langlochs der Sperrnase so gewählt, dass dessen Längsachse senkrecht auf die lineare Bewegungsrichtung der Sperrnase steht. Das Aktivieren des Motors mit Rotation seiner Drehwelle verursacht eine exzentrische KreisBewegung des Exzenters 6 und damit eine Verschiebebewegung der Sperrnase 5'; und zwar einmal in Richtung hin zum Außenumfang der Steckachse, sowie entgegengesetzt hierzu in Richtung nach außen weg von der Steckachse.

Durch die gewählte Positionierung der Sperrnasenführung mit Sperrnase 5' und der Taschen 1" auf der Steckachse kommt es bei Drehung der Steckachse 1' mit schließender Gewindeverschraubung (also normalerweise einer Rechtsdrehung) zwischen Außengewinde der Steckachse und Innengewinde am Gabelholm zu einer Ratschenwirkung: Nachdem die Sperrnase 5' in eine der Taschen 1" gelangt, wird die Sperrnase bei Weiterdrehung der Steckachse wieder durch den Boden der Tasche angehoben. Diese Bewegung erfolgt über die gesamte Distanz entgegen der Federkraft der Feder 8, die dadurch wieder vorgespannt wird. Auf die Drehwelle des Motors wird dadurch keine Kraft ausgeübt. Mit anderen Worten wird durch diese Drehbewegung die Sperrnase 5' soweit angehoben, dass der Boden des Langloches den Exzenter noch nicht kontaktieren kann. Wird die Steckachse nun noch weiter in rechtsdrehender Schließrichtung verdreht, wird sodann die Sperrnase 5' durch die Vorspannung der Feder 8 in die nächste Tasche 1" gedrückt, usw.

Betrachtet man die entgegengesetzte Drehung der Steckachse - also in linksdrehender Öffnungsrichtung zum Lösen der Schraubverbindung zwischen Außengewinde der Steckachse und dem Innengewinde am Gabelholm, so ist diese Bewegung gesperrt, insofern die Sperrnase 5' in ihrer Verriegelungsstellung vorliegt und in einer Tasche sitzt. Zu dieser Situation kommt es jedoch zwangsläufig, auch wenn sie nicht anfänglich vorliegt, wenn die Sperrnase nicht in einer Tasche ruht. Dann ist die Steckachse lediglich eine kurze Distanz drehbar, die jedoch nicht zum Öffnen der Schraubverbindung führen kann. Nachfolgend dieser kurzen Drehbewegung kommt die Sperrnase unweigerlich durch die Federkraft in die nachfolgende Tasche.

Vorgang der Entriegelung bei beiden obigen Ausführungsformen 1 und 2: Der Motor 7 ist über einen Steuerchip mit einer Fernbedienung ansteuerbar. Mit Ansteuerung kann die Drehrichtung der Drehwelle bestimmt werden, sodass mittels Fernbedienung ein "Entriegeln" wie auch ein "Verriegeln" gewählt werden kann.

Die Stromversorgung für den Motor und gegebenenfalls den Steuerchip erfolgt über eine interne Batterie oder über eine am Vehikel vorgesehene Batterie bzw. Akku-Zelle.

### Bezugszeichenliste:

| | |
|---|---|
| Steckachse | 1 |
| Ausfräsung (als umlaufende Nut) | 1' |
| Ratschen-Tasche | 1ʺ |
| Hohlwelle | 2 |
| Bautei lträger | 3 |
| Platte | 4 |
| Sperrnase | 5, 5' |
| Exzenter | 6 |
| Motor | 7 |
| Feder | 8 |
| Verschraubung | 9 |
| Seitenfläche | 10 |
| Zylindermantel des Nabengehäuses | 11 |
| Seitenfläche | 12 |
| Kugellager | 13 |
| Distanzbuchse | 14 |

## Patentansprüche

1. Radnabe zum Einspannen in eine Radgabel, welche Radnabe eine Radnaben-Achse und ein auf der Radnaben-Achse gehaltenes Nabengehäuse (10, 11, 12) aufweist, wobei die Radnaben-Achse als Hohlwelle (2) ausgebildet ist, und die Radnabe ferner eine Steckachse (1) aufweist, die zum Einspannen der Radnabe in eine Radgabel durch die Hohlwelle (2) steckbar ist, um sie nachfolgend an ihren jeweiligen Enden an Gabelenden fixieren zu können, **dadurch gekennzeichnet, dass** die Radnabe eine im Radnabengehäuse verfahrbar gehaltene Sperrnase (5; 5') aufweist, die zum Verriegeln der Steckachse (1) in der Hohlwelle (2) in eine Verriegelungsstellung bringbar ist, in der die Sperrnase (5; 5') in eine an der Steckachse vorgesehene Ausnehmung (1′; 1ʺ) eingreift.

2. Radnabe nach Anspruch 1, **dadurch gekennzeichnet, dass** zum Verriegeln der Steckachse in der Hohlwelle die Sperrnase (5; 5') für den Eingriff durch eine Öffnung in der Hohlwelle hindurch in die Ausnehmung (1'; 1") einschiebbar ist.

3. Radnabe nach einem der vorangehenden Ansprüche, **dadurch gekennzeichnet, dass** die Steckachse (1) an zumindest einem ihrer Enden einen Schnellspann-Verschluss aufweist.

4. Radnabe nach einem der vorangehenden Ansprüche, **dadurch gekennzeichnet, dass** die Radnabe innenliegend im Nabengehäuse (10, 11, 12) einen Verfahrmechanismus mit elektrisch betriebenem Motor (7) aufweist, mit dem die Sperrnase (5; 5') verfahrbar ist.

5. Radnabe nach einem der vorangehenden Ansprüche, **dadurch gekennzeichnet, dass** die Sperrnase (5; 5') mit einer Feder (8) vorspannbar ist, die die Sperrnase (5; 5')in eine Verriegelungsstellung als ihre Ruhestellung bringt.

6. Radnabe nach einem der vorangehenden Ansprüche, **dadurch gekennzeichnet, dass** die Ausnehmung als radial umlaufende Nut (1') an der Steckachse ausgeführt ist.

7. Radnabe nach einem der vorangehenden Ansprüche 1 bis 6, **dadurch gekennzeichnet, dass** die Ausnehmung durch mindestens eine Tasche (1") gebildet ist, die durch einen radialen keilförmigen Einschnitt am Außenumfang der Steckachse gebildet ist.

8. Radnabe nach Anspruch 7, **dadurch gekennzeichnet, dass** eine Mehrzahl an Taschen (1") vorgesehen ist, die radial zueinander um den Außenumfang der Steckachse jeweils beabstandet sind, und die Keilform eines jeweiligen Einschnitts eine komplementäre Form zu dem Teil der Sperrnase einnimmt, mit dem die Sperrnase vollflächig anliegend in die Tasche greift.

9. Radnabe nach einem der vorangehenden Ansprüche 4 bis 8, **dadurch gekennzeichnet, dass** die Sperrnase (5; 5') mittels eines Exzenters (6) verfahren wird, der auf einer Abtriebswelle des Motors (7) sitzt.

10. Rad mit einer Radnabe nach einem der vorangehenden Ansprüche 1 bis 9.

11. Vehikel mit einem Rad nach Anspruch 10, das ferner eine Radgabel mit zwei Gabelholmen aufweist, wobei an mindestens einem Ende eines Gabelholmes eine geschlossene Bohrung zum Durchführen der Steckachse vorgesehen ist.

## Claims

1. A wheel hub for clamping into a fork, the wheel hub comprising a wheel hub axle and a hub housing (10, 11, 12) held on the wheel hub axle, wherein the wheel hub axle is designed as a hollow shaft (2), and the wheel hub further comprises a thru-axle (1) which can be inserted through the hollow shaft (2) to clamp the wheel hub into a fork in order to subsequently fix it at its respective ends to the fork ends, **characterized in that** the wheel hub comprises a locking latch (5; 5') movably held in the hub housing, which can be brought into a locking position to secure the thru-axle (1) in the hollow shaft (2), wherein the locking latch (5; 5') engages in a recess (1'; 1") provided on the thru-axle.

2. The wheel hub according to claim 1, **characterized in that** to lock the thru-axle in the hollow shaft, the locking latch (5; 5') can be inserted through an opening in the hollow shaft into the recess (1'; 1").

3. The wheel hub according to any of the preceding claims, **characterized in that** the thru-axle (1) has a quick-release lock at at least one of its ends.

4. The wheel hub according to any of the preceding claims, **characterized in that** the wheel hub comprises an internal actuation mechanism inside the hub housing (10, 11, 12) with an electrically driven motor (7), by which the locking latch (5; 5') is movable.

5. The wheel hub according to any of the preceding claims, **characterized in that** the locking latch (5; 5') can be biased by a spring (8), which brings the locking latch (5; 5') into a locking position as its resting position.

6. The wheel hub according to any of the preceding claims, **characterized in that** the recess is designed as a circumferential groove (1') on the thru-axle.

7. The wheel hub according to any of the preceding claims 1 to 6, **characterized in that** the recess is formed by at least one pocket (1"), which is created by a radial wedge-shaped cutout on the outer circumference of the thru-axle.

8. The wheel hub according to claim 7, **characterized in that** a plurality of pockets (1") is provided, which are spaced radially from each other around the outer circumference of the thru-axle, and the wedge shape of a respective cutout has a complementary shape to the part of the locking latch that fully contacts the pocket when engaged.

9. The wheel hub according to any of the preceding claims 4 to 8, **characterized in that** the locking latch (5; 5') is actuated by an eccentric cam (6), which is mounted on an output shaft of the motor (7).

10. A wheel with a wheel hub according to any of the preceding claims 1 to 9.

11. A vehicle with a wheel according to claim 10, further comprising a fork with two fork legs, wherein at least one end of a fork leg has a closed bore for passing through the thru-axle.

## Revendications

1. Moyeu de roue destiné à être fixé dans une fourche, le moyeu de roue comprenant un axe de moyeu et un boîtier de moyeu (10, 11, 12) maintenu sur l'axe de moyeu, l'axe de moyeu étant conçu comme un arbre creux (2), et le moyeu de roue comprenant en outre un axe traversant (1) pouvant être inséré à travers l'arbre creux (2) pour fixer le moyeu de roue dans une fourche, afin de le fixer ensuite à ses extrémités respectives aux extrémités de la fourche, **caractérisé en ce que** le moyeu de roue comprend un loquet de verrouillage (5; 5') maintenu de manière mobile dans le boîtier de moyeu, qui peut être amené dans une position de verrouillage pour sécuriser l'axe traversant (1) dans l'arbre creux (2), le loquet de verrouillage (5; 5') s'engageant dans une cavité (1'; 1") prévue sur l'axe traversant.

2. Moyeu de roue selon la revendication 1, **caractérisé en ce que**, pour verrouiller l'axe traversant dans l'arbre creux, le loquet de verrouillage (5; 5') peut être inséré à travers une ouverture dans l'arbre creux dans la cavité (1'; 1").

3. Moyeu de roue selon l'une des revendications précédentes, **caractérisé en ce que** l'axe traversant (1) comporte un mécanisme de fermeture rapide à au moins une de ses extrémités.

4. Moyeu de roue selon l'une des revendications précédentes, **caractérisé en ce que** le moyeu de roue comprend un mécanisme d'actionnement interne à l'intérieur du boîtier de moyeu (10, 11, 12) avec un moteur électrique (7), permettant le déplacement du loquet de verrouillage (5; 5').

5. Moyeu de roue selon l'une des revendications précédentes, **caractérisé en ce que** le loquet de verrouillage (5; 5') peut être sollicité par un ressort (8), qui amène le loquet de verrouillage (5; 5') dans une position de verrouillage en tant que position de repos.

6. Moyeu de roue selon l'une des revendications précédentes, **caractérisé en ce que** la cavité est conçue sous la forme d'une rainure périphérique (1') sur l'axe traversant.

7. Moyeu de roue selon l'une des revendications précédentes 1 à 6, **caractérisé en ce que** la cavité est formée par au moins une poche (1"), qui est créée par une découpe en forme de coin radial sur la circonférence extérieure de l'axe traversant.

8. Moyeu de roue selon la revendication 7, **caractérisé en ce qu'**un ensemble de poches (1") est prévu, qui sont espacées radialement les unes des autres autour de la circonférence extérieure de l'axe traversant, et la forme en coin de chaque découpe a une forme complémentaire à la partie du loquet de verrouillage qui vient en contact complet avec la poche lorsqu'il est engagé.

9. Moyeu de roue selon l'une des revendications précédentes 4 à 8, **caractérisé en ce que** le loquet de verrouillage (5; 5') est actionné par un excentrique (6), qui est monté sur un arbre de sortie du moteur (7).

10. Roue comprenant un moyeu de roue selon l'une des revendications précédentes 1 à 9.

11. Véhicule comprenant une roue selon la revendication 10, comprenant en outre une fourche avec deux bras de fourche, dont au moins une extrémité comporte un alésage fermé permettant le passage de l'axe traversant.
